# EUROPEAN PATENT SPECIFICATION

(11) **EP 1 170 985 B1**
(45) Date of publication and mention of the grant of the patent: **23.07.2008**
(21) Application number: 99973710.9
(22) Date of filing: 08.11.1999
(51) Int. Cl.: A01G 9/24, A01G 25/16, E02B 8/06, E02B 13/00

(54) **A METHOD AND APPARATUS FOR FLOOD IRRIGATION**
VERFAHREN UND VORRICHTUNG ZUR BEWÄSSERUNG DURCH ÜBERSCHWEMMUNG
PROCEDE ET APPAREIL D'IRRIGATION PAR SUBMERSION

(30) Priority: 23.02.1999 US 256459; 30.08.1999 WO PCT/US99/19936
(43) Date of publication of application: 16.01.2002
(73) Proprietor: Holloway, Rufus M., Jr., Orlando, FL 32806 (US)
(72) Inventor: Holloway, Rufus M., Jr., Orlando, FL 32806 (US)
(74) Representative: Beattie, Alex Thomas Stewart
(86) International application number: PCT/US1999/026333
(87) International publication number: WO 2000/049853

(56) References cited:
- US-A- 1 262 898
- US-A- 4 268 993
- US-A- 4 431 338
- US-A- 5 009 029

## Description

### FIELD OF THE INVENTION

This invention relates to irrigation methods and techniques. More specifically, this invention pertains to a method and apparatus for employing flood irrigation.

### BACKGROUND OF THE INVENTION

Various irrigation methods and systems are incorporated for use in various industries as nurseries or farming. Plants as ornamental trees as crepe myrtles, oak trees, magnolia trees, crop seedlings or other plants are often grown in controlled situations. These types of plants are usually sold at an early stage in their life cycles, so nurseries maintain seedlings or saplings which are smaller than mature plants. As a result, these nurseries are able to maintain large volumes of plants in a limited amount of space. In as much as these plants are being handled at early stages of their life cycles, proper care is critical and necessary to maintain the plants.

Various methods of irrigation may be used to supply water to the plants. One such irrigation technique utilizes overhead sprinklers. An overhead sprinkler system may fail to uniformly distribute water to all plants. While overhead sprinkler systems may be less expensive to operate, these systems are very expensive to install.

Another irrigation method often used is a water bubbling system that employs drip hoses and pipes. Elongated pipes are placed adjacent a row of plants and water bubbles through an aperture in the hose adjacent a plant. This may provide a more uniform distribution of water than overhead sprinkler systems; however, these systems are labor intensive and expensive to maintain. Each source of water must be monitored to insure water is distributed from the apertures to the plants.

US Patent No. 5,009,029 discloses a method and apparatus for growing plants by controlling growing temperatures in conventional and hydroponic planting systems. Plants placed in a plant growing medium contained in metal growing trays placed in contact with a closed metal piping system and disposed externally to and structurally supporting the growing trays and containing a temperature-control liquid, thereby providing conductive heat exchange with the plant growing trays and plants. The plants are also supplied with liquid nutrients and artificial light conducive to plant growth.

### SUMMARY OF THE INVENTION

It is an object of this invention to provide a system and method for irrigation that efficiently distributes water to a plurality of plants, and is cost effective. Another objective of this invention is to provide a flood irrigation system and method that utilise a water reclamation system.

These and other objectives are achieved by employing the present novel flood irrigation method and system, as disclosed respectively in claims 23 and 1. The system includes a plurality of flood plains. Each flood plain contains a plurality of plants and each plant is held in a perforated pot. The flood plains may be excavated at different elevations from an upper most elevation to a lower most elevation. The flood plains are flooded for a resident time period with a selected volume of water directed from a water source. If the flood plains are excavated to different elevations, gravity, and a series of flood gates, control the water flow from one flood plain to a next lower flood plain. If the flood plains are all at the same elevation, or if only one flood plain is utilized, the water source may be at a lower elevation so that gravity flow will drain the flood plain to the water source after the water is pumped into the flood plain.

Each flood plain has a top surface and an underlying bed comprising a soil and clay composition. The surface of each bed is contoured to adequately support vehicles and laborers to prevent depressions in the bed which may adversely affect water flow in and out of a flood plain. The flood plains and the water source may be lined with a water impermeable membrane. The flood plains may also be contoured to effectively drain water from one flood plain to the next.

A water reclamation system is connected to the irrigation system. Water drained from the flood plains is collected in a water collection area. The water in the water collection area is used to flood the irrigation field.

In one embodiment a plurality of flexible and inflatable dikes are disposed along the irrigation system whereby a dike is disposed between consecutive flood plains. The dikes are placed in fluid communication with the reservoir and each other. A conduit interconnects the dikes to drain and fill consecutive dikes with water from the reservoir. In one embodiment, an inflatable valve is positioned within each flood plain proximate an opening in the conduit. The inflatable valve may be in the shape of a donut surrounding the opening. When the inflatable valve is inflated, it prevents the flow of water between the conduit and the flood plain. When the inflatable valve is deflated, water may pass freely from the conduit into the flood plain and vice versa. The inflatable valve may be controlled by a solar powered control valve in a supply line provided to the valve from the water collection area. By individually controlling the inflatable valves in the individual flood plains, a predetermined pattern of irrigation may be provided to individual flood plains in accordance with the needs of the particular plant being grown in that flood plain.

### BRIEF DESCRIPTION OF THE DRAWINGS

FIG. 1 is a perspective view of the present flood irrigation system.
FIG. 2 is an expanded view of an upper flood plain and lower flood plain.
FIG. 2A is a view of the flood gate opened flooding a lower flood plain.
FIG 2B is a view of the lower flood plain flooded with water from of the upper flood plain.
FIG. 3 is a sectional view of the flood irrigation system taken along line 3-3 in FIG 1.
FIG. 4 through 4B is a sectional of the irrigation system taken along line 4-4 showing the sequential flooding of consecutive flood plains.
FIG. 5 is a top view of a second embodiment of the invention.
FIG. 6 is a side sectional view of the flood plain 31A.
FIG. 7 is a side sectional view of the flood plain 31A.
FIG. 8 is a perspective view of the valve mechanism of the invention.
FIG. 9 is a perspective view of the valve mechanism of the invention.
FIGs. 10 through 16 is a side sectional view of the invention showing irrigation of the flood plains from the top flood plain 31A to the reservoir.
FIG. 17 is a top view of the valve mechanism, conduit and dike on a flood plain.
FIG. 18 is a top view of a bag valve mechanism in a flood irrigation system of the invention.
FIG. 19 is a top view of a flood irrigation apparatus having a plurality of flood plains, a pumping apparatus and an inflatable valve in each flood plain.
FIG. 20 is a partial sectional view of the flood irrigation apparatus of FIG 19 as seen along section V-V with the inflatable valve in an inflated condition.
FIG. 21 is a partial sectional view of the flood irrigation apparatus of FIG 19 as seen along section V-V with the inflatable valve in a deflated condition.
FIGs. 22A-22C are elevational views of a flood irrigation apparatus having a plurality of flood plains at different elevations, illustrating the operation of the inflatable valves between adjacent flood plains as water cascades between the consecutive flood plains.

Identical components illustrated in more than one figure are numbered consistently in each figure.

### DETAILED DESCRIPTION OF THE DRAWINGS

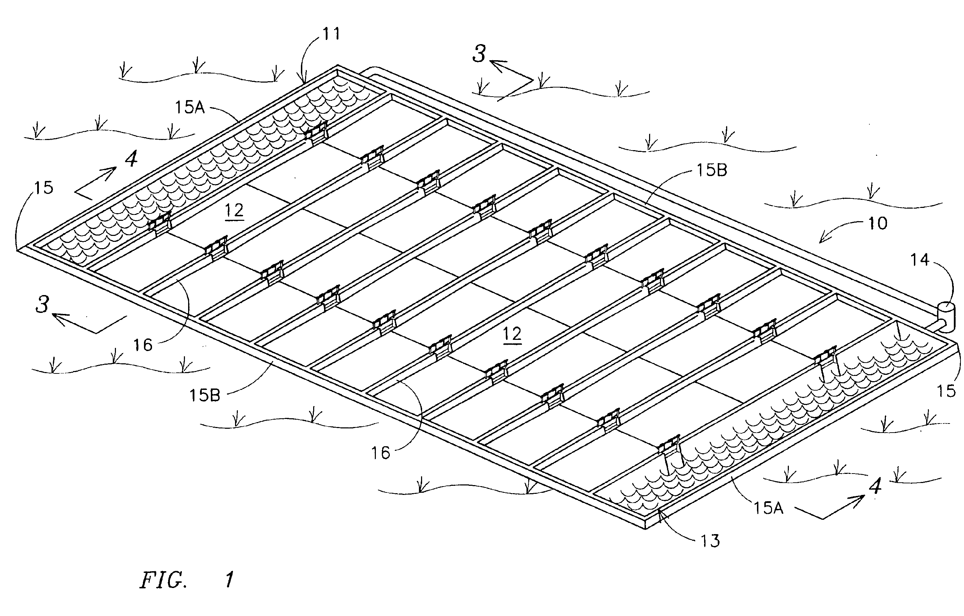

A flood irrigation system 10 is depicted in FIG. 1 which incorporates the method for flood irrigation that is the subject invention. The irrigation system 10 in the embodiment shown in FIG. 1 is excavated to generally form an overall gradient, and includes a reservoir pond 11 for a water source, a plurality of flood plains 12 for holding potted plants and water, a retention pond 13 for collecting water drained from the flood plains 12 and a pump system 14 for reclaiming water from the retention pond 13 to the reservoir pond 11. The reservoir pond 11, flood plains 12 and retention pond 13 are excavated at different elevations so that water flow from the reservoir 11, through the flood plains 12 and to the retention pond 13 is controlled largely by gravity. The embodiment of the invention illustrated in FIG. 1 has a dike system that includes a plurality of dikes that serve to hold water within the flood plains and separate consecutive or adjacent flood plains 12. The flood plains 12, as well as the reservoir pond 11 and retention pond 13 in this embodiment, are surrounded by a perimeter dike 15. Interior dikes 16 extend from side to side of the perimeter dike 15 dividing an excavated area into the reservoir pond 11, flood plains 12 and retention pond 13. The flood irrigation system shown in FIG. 1 is constructed in a rectangular figure. The perimeter dike 15 has two end dikes 15A and two side dikes 15B. The flood plains 12 extend parallel to one another. Accordingly, the flood plains 12 are excavated in a stepped design along the gradient between an upper most elevation occupied by the reservoir 11, and a lower most elevation occupied by the retention pond 13.

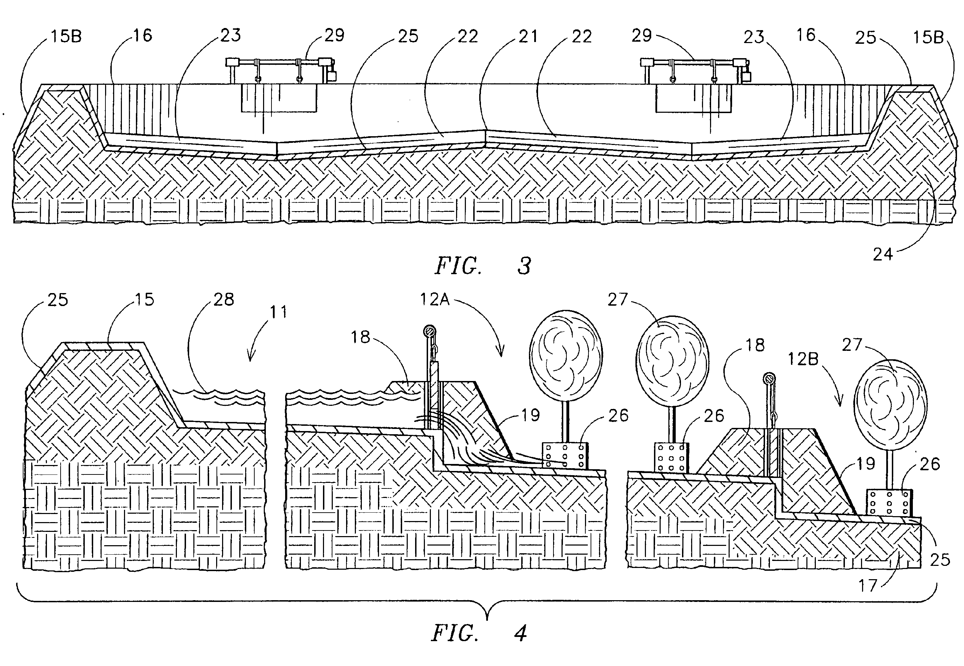

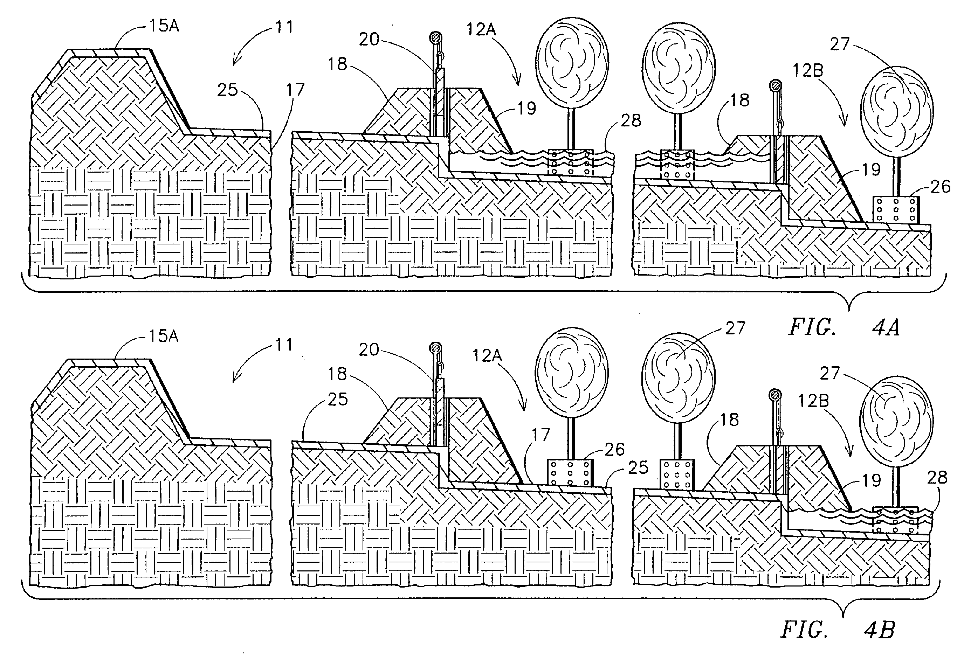

As illustrated in FIGS. 4, 4A and 4B, consecutive flood plains 12A and 12B share interior dike 16. Each interior dike 16 may be separated into two dikes which are identified as an egress dike 18 for the upper flood plain 12A and an ingress dike 19 for the lower flood plain 12B. The flood plain 12 includes top surface having an underlying bed 17 which are bordered at sides by an ingress dike 19, an egress dike 18 and the dikes 15B and 15B (shown in FIG. 1).

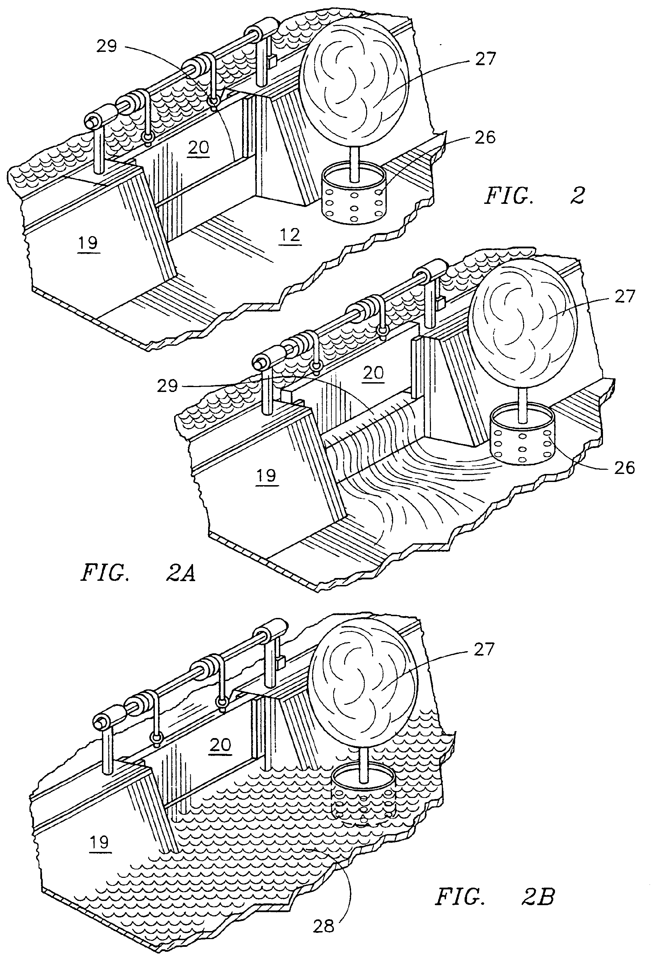

As shown in FIG.4, the top and surface and bed 17 of each of the flood plains 12A and 12B are sloping or inclined downward from the egress dike 18 to the ingress dike 19. The pitch or angles of the surface of the bed 17 of the flood plains 12 may vary depending on numerous factors such as the overall size of the irrigation system, the soil texture, the size of each flood plain 12 and the overall gradient of the irrigation system from the top to bottom. A spillway 29 (also shown in FIGs. 2, 2A and 2B) connects the upper flood plain 12A to the lower flood plain 12B. A flood gate 20 is mounted in the spillway 29 and is adjustable to open and close the spillway 29 for water to flow from the upper flood plain 12A to the lower flood plain 12B.

With respect to FIGs. 4, 4A and 4B, the steppe design is illustrated between two consecutive flood plains 12A and 12B, and the reservoir pond 11. The difference in the elevation in the flood plains 12A and 12B will vary depending on the size of the irrigation system 10 constructed. In a large scale system that includes flood plains 12 over twenty acres, the flood plains 12 may be as long as six hundred feet long and ninety feet wide. The difference in elevation between consecutive flood plains in such a case may be approximately two to three feet. The elevation of the flood plain 12 and bed 17 may drop about six inches from the ingress dike 19 to the egress dike 18.

In addition to the surface of the flood plain 12 sloping downward from an egress dike 18 to an ingress dike 19, the surface of the flood plain 12 also has transversely inclined surfaces 22. The flood plain 12 has a median 21, centered between the side dikes 15B. The median 21 is about the same elevation of the flood plain 12 at the points where the flood plain 12 meets the side dikes 15B. The surfaces 22 are inclined downward from the median 21 to approximately a centerline of the flood gate 20. The surfaces 23 extend downward from the dikes 15B toward the surfaces 22 forming a funnel-like surface on the bed 17 for controlling the flow of the water in and out of the flood plain 12.

A water impermeable membrane 25 covers the entire surface of the flood plain 12 and the dikes 15 and 16. The membrane 25 seals the flood plains 12 and prevents erosion of the underlying soil. The soil is preferably treated with a clay mixture to form a firm soil top layer 24. This top layer 24 prevents depressions forming in the bed 17 which may restrict water flow.

The operation of the system is shown in FIGs. 2 through 2B and FIGs. 4 through 4B. In FIG. 4, the reservoir 11 as serves a water source for the flood plains 12A and 12B. As shown in FIGS. 2, 2A and 2B, the flood plains 12 have a plurality of pots 26 for holding plants 27. Each of the pots 26 has holes so water may penetrate the pot 26 and irrigate the plants 27. The flood plains 12 are flooded in sequence with a selected volume of water 28 from the reservoir pond 11. The flood gates 20 between the reservoir pond 11 and the flood plain 12A are raised and water 28 drains into the flood plain 12A. The volume of water 28 may depend on the desired water level within each flood plain 12. The pots 26 should be large enough and the water level should not be so high to topple the pots 26. In addition, the flow rate of the water 28 should be slow enough to prevent toppling the pots.

The water 28 is held in the flood plain 12 for a resident time sufficient to irrigate the plants 27 within the pots 26. The amount of time the water 28 will remain in each flood plain 12 is determined in part by the type of plant 27 in the pots 26. One skilled in the art may be able to determine the resident time without undue experimentation.

When the water 28 is drained from an upper flood plain 12A to the lower flood plain 12B, the flood gate 20 remains open as well as flood gates 20 between consecutive dry flood plains 12 so that rain water may drain through the system. Of course, the flood gate 20 for a flood plain 12 retaining water must remain closed, but the level of the water is monitored to drain excess water as necessary. In addition, the water level is monitored to avoid undue loss of water 28 resulting from evaporation or absorption by the plants. The water 28 in a flood plain 12 may be supplanted as necessary to maintain an adequate water level.

After each of the flood plains 12 has been flooded, the water 28 is drained into the retention pond 13. A pump system 14 pulls water from the pond 13 and directs the water 28 back to the reservoir 11 where it is recycled through the irrigation system 10. The retention pond 13 is preferably larger than the reservoir pond 11 and may be able to hold up to five times, or greater, the volume of water as the retention in order to replenish the water supply in the reservoir pond 12 or the flood plains 12.

The retention pond 13 is made larger so that excessive rainwater may be collected in the retention pond 13 and used in the irrigation system 10.

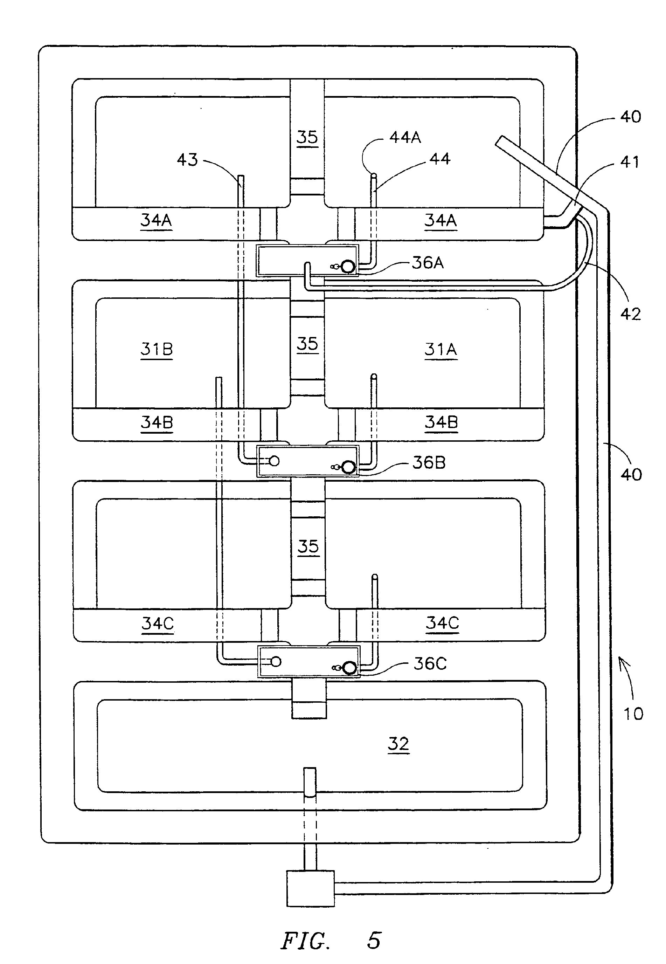

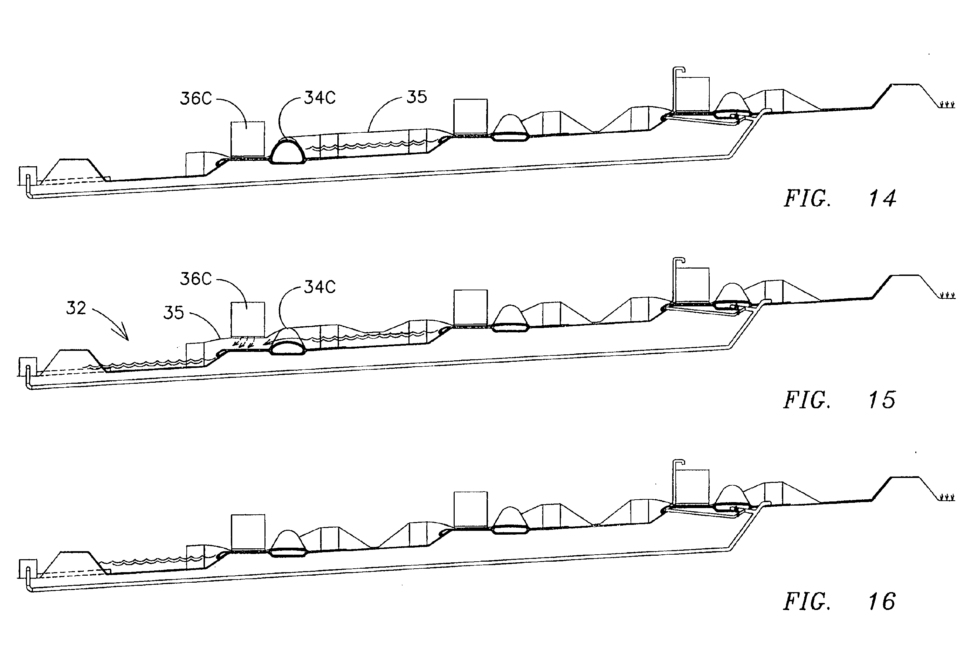

The FIGs. 5 through 17 illustrate the design and function of a second embodiment of the invention. The flood irrigation system 10 depicted in FIG. 5 incorporates the method for flood irrigation that is the subject of this invention. As in the first embodiment, the flood irrigation system 10 is comprised of a plurality of downward-sloping flood plains 31, where each consecutive flood plain 31 is excavated at a lower elevation than the preceding flood plain 31 so that the water flow through the irrigation system 10 is due in part to gravity. The flood irrigation system 10 extends from a top flood plain 31A located at the highest elevation to a retention pond 32 located at the lowest elevation. The bottom of each flood plain 11 is lined with a water impervious membrane 33 to avoid water loss.

The second embodiment of the flood irrigation system 10 contains a dike system comprising a plurality of flexible and inflatable dikes 34 wherein each dike 34 is disposed between consecutive flood plains 31. With respect to FIGs. 5, 6 and 7, the dike 34 on each flood plain 31 is disposed toward a bottom of the inclined surface of the flood plain 31 adjacent a lower consecutive flood plain 31. The dikes 34 are expandable in the sense the dikes are inflatable to a height sufficient to retain water in a flood plain 31 above the dike 34, and deflatable to allow water to flow over the deflated dike 34, from an upper flood plain to a lower consecutive flood plain. Water is used to inflate the dikes 34. A series of conduits 35, in fluid communication with the dikes 34, interconnect the dikes 34 to sequentially inflate dikes 34, as water simultaneously flows from an upper flood plain to an adjacent lower flood plain over a deflated dike 34. In addition, a plurality of valve mechanisms 36, are disposed adjacent the junction of the dikes 34 and conduits 35, are operationally linked with the drainage of water between consecutive flood plains to control the flow of water between consecutive dikes 34.

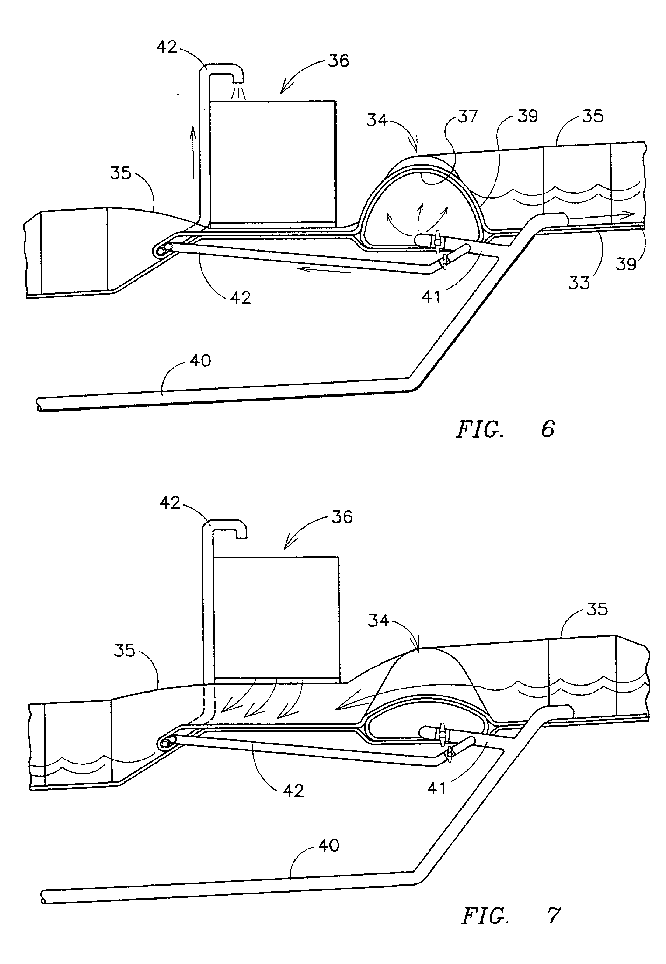

With respect to FIGs. 6 and 7, a sectional view of a dike 34 is illustrated. The dike 34 comprises a flexible water impermeable material folded onto itself to form a duct 37 through which water flows. The duct 37 is disposed within a furrow 38 that extends the length of the flood plain 31. The membrane 33 also lines the furrow 38, and the duct 37 is placed on the membrane 33 within the furrow 38. A sheath 39, of similar texture of the membrane 33 , attaches to the membrane 33 and extends over the duct 37. As water flows from an upper flood plain, over a deflating dike 34, to a lower flood plain 31, the sheath 39 prohibits water from submerging the duct 37 which may cause the duct 37 to float and adversely effect the water flow through the dike 34, and from an upper flood plain to a lower flood plain.

Alternatively, the material of dike 34 may be sealingly attached to the material of the membrane 33 to prevent water from flowing under the dike 34. Such attachment may be made by a thermal process referred to as "welding" when the materials of the membrane 33 and dike 34 are polyethylene or other plastic material. Alternatively, an adhesive or water-tight mechanical seal may be used. If sealed on both the ingress and egress sides, the dike 34 may actually form a portion of membrane 34 and may be placed directly on the underlying bed 17.

In order to more clearly explain the details of the invention the top flood plain is designated as 31A, and the lower or second flood plain shall be designated 31B. The dikes and valve mechanisms shall have similar designation corresponding to the appropriate flood plains. For instance the dike 34B is disposed along the bottom of the flood plain 31B, and the valve mechanism 36B is similarly disposed on the second flood plain 31B to control the water flow into the dike 34B. The dike 34B will inflate when the valve mechanism 36B is closed to retain water in the dike 34B, and retain water in the flood plain 31B.

The FIGs. 5 and 6 also illustrate a conduit 35 in fluid communication with the dike 34A. A valve mechanism 36A is shown in FIG. 6 in a closed position restricting flow from the dike 34A and conduit 35 in the top flood plain 31A to the conduit 35 and dike 34B in the second flood plain. The FIG. 7 is an illustration of the valve mechanism 36A in an open position and the dike 34A deflated. Water within the dike 34A has drained into the dike 34B on the second flood plain 31B. As the dike 34A gradually deflates, water maintained in the top flood plain 31A flows over the deflated dike 34A and into the flood plain 31B. Referring again to FIGs. 5 and 6, there is shown the top flood plain 31 in fluid communication with the retention pond 32 via the pump and main line 40. The top flood plain 31A is first flooded with water pumped from the retention pond 32 through a main pipe 40 which empties into the top flood plain 31A. A secondary pipe 41 draws from the main pipe 40 to fill the dike 34A on the first flood plain 31A. A tertiary pipe 42 also draws from the main pipe 40 and empties into the valve mechanism 36.

Thus the top flood plain 31A and dike 34A are simultaneously filled.

The valve mechanisms 36 are operationally linked with the flow and drainage of water from flood plain to flood plain. As the valve mechanism 36A of the top flood plain 31A fills with water, it applies a downward pressure on the conduit 35 below the dike 34A on the top flood plain 31A, thereby preventing water from flowing out of the dike 34A of the top flood plain 31A. Before the dike 34A of the top flood plain 31A fills with water, the dike 34A of the top flood plain 31A inflates, forming a barrier that prevents the water from leaving the top flood plain 31A which is simultaneously being filled. Once the dike 34A fills to capacity, the flood plain 31A continues to fill to a predetermined level with a selected volume of water.

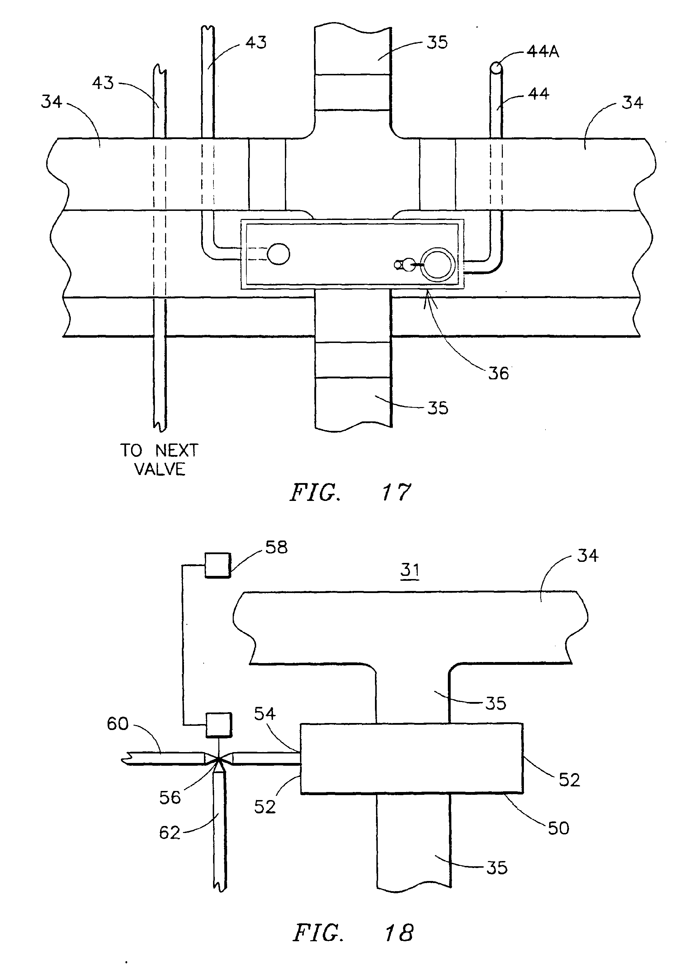

Referring now to FIGs. 5 and 17, a valve-fill pipe 43 extends from each flood plain 31 to a valve mechanism 36 on the consecutive flood plain 31 at a lower elevation. As the top flood plain 31A fills with water, water is transported from the top flood plain 31A to the valve mechanism 36B via a valve-fill pipe 43. The valve mechanism 36B of the next consecutive flood plain 31B is located below the intersection of the dike 34B and conduit 35 the next consecutive flood plain 31B. As the valve mechanism 36B of the second flood plain 31B fills with water, it applies a downward pressure on the expandable dike system just below the intersection of the dike 34B and conduit 35. Thus when the valve mechanism 36A is opened water flows from dike 34A through the conduit 35 into the dike 34B on the second flood plain. The valve mechanism 36B having been activated closes the conduit 35 below the second dike 34B which inflates with water in anticipation of water emptying from the top flood plain 31A and spilling into the second flood plain 31B.

Referring now to FIGs. 6-9, the operation of the valve mechanism is shown in more detail. The valve mechanism 36 is opened by a flushing apparatus. The valve mechanism 36 includes a housing 51, and a vertically disposed cylinder 45 is mounted on the floor of the housing 51 and holds a float 46. The float 46 is linked to a plug 48 by chain 49. The plug 48 closes a drain-hole 50 in the bottom of the valve mechanism housing 51.

A second valve-fill pipe 44 extends from the flood plain 31 to the cylinder 45 within the housing 51 of the valve mechanism 36. The valve-fill pipe 44 has a vertical extension 44A. As water filling a flood plain 31 reaches a depth equal to or greater than the height of the vertical extension 44A, water pours into the vertical extension 44A. The water is directed into the housing 51 and rises within the cylinder 45. The float 46 rises concomitantly with the water, and the chain 49 pulls open the plug 48 opening the drain-hole 50. Water then drains from the valve mechanism 36 through the drain hole 50.

The water having drained from the housing 51 of the valve mechanism 36, the water within the dike 34 forces the valve mechanism open and drains through the conduit 35 to the dike 34 on the adjacent flood plain at the lower elevation. The dike 34A of the top flood plain 31A deflates, while the dike 34B of the next consecutive flood plain inflates. With the barrier thus deflated, water from the top flood plain 31A flows downhill to the next consecutive flood plain 31B, where it is prevented from flowing further downhill by the now inflated intermediate dike 34B of the next consecutive flood plain.

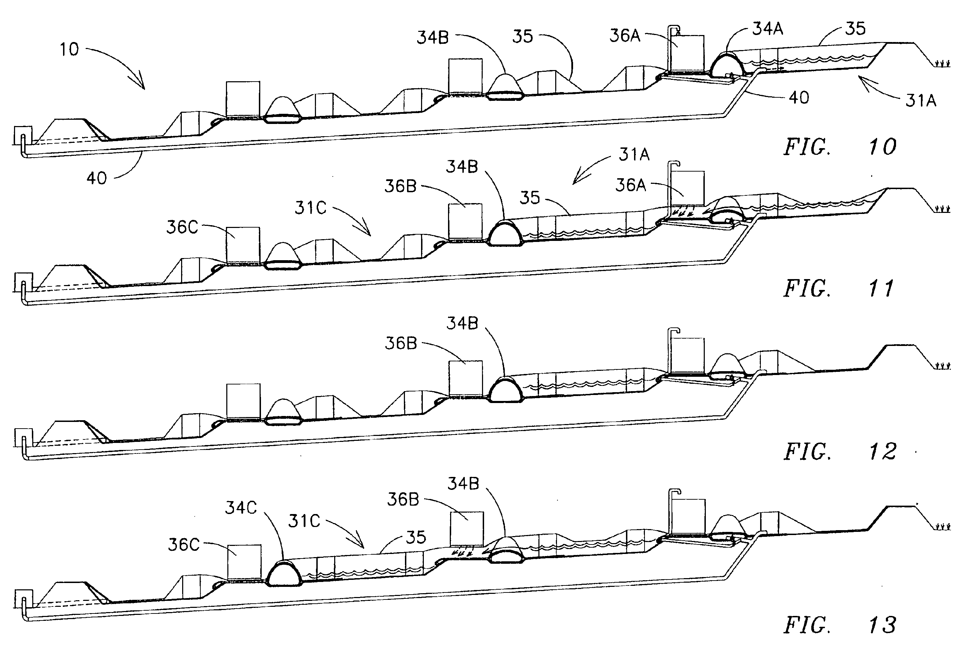

Referring now to FIGs. 10-16, this process is repeated for each consecutive flood plain 31 until water reaches the retention pond 32. As shown in FIGs. 10 and 11, as water drains from the top flood plain 31A into the second flood plain 31B, the valve mechanism 36B has been filled and the dike 34B is inflated to retain water in the second flood plain 31B. As water drains into the second flood plain 31B, the valve mechanism 36C on the third flood plain 31C is filled with water via the first valve-fill pipe 43 extending from the second flood plain 31B to the third valve mechanism 36C. With respect to FIGs. 11, 12 and 13, as water fills the second flood plain 31B, the water reaches a level above the vertical extension 44A on valve-fill pipe 44. As water pours into the second valve-fill pipe 44, water is directed to the valve mechanism 36B on the second flood plain 31B. The flushing apparatus is activated and the water drains from the valve mechanism 36B. Water within the conduit 35 and second dike 34B then drains to the dike 34C and conduit 35 on the third flood plain 31C.

As the dike 34B deflates, water in the second flood plain 31B begins to cascade over the deflating dike 34B and drains into the third flood plain 31C. In as much as the deflation of the dikes is due to water drainage into other dikes, the deflation is a gradual process. Accordingly, the gradual deflation of the dike 34 in part controls the flow rate of the water from an upper flood plain to a lower flood plain. A dramatic deflation of the dike 34 may cause a significant flow rate that could topple plants and/or erode soil from the pots as it pours into the flood plain. This sequential flooding of the flood plains is repeated through the irrigation system 10 until the water is drained into the retention pond 32 as shown in FIGs. 11 and 12. The pump system 14 directs the water back to the top flood plain 31A via the main pipe 44 in order to initiate the process again.

An alternative embodiment of valves 36 of Figure 5 is a simple water bag 50 as illustrated in Figure 18. A tube of flexible, water-tight material is sealed to form a water containing bag 50. One such material is a multi-layer polyethylene. Such material is commonly produced in tubular form with a circumference of ten feet, thereby forming a bag having a deflated diameter of five feet. The ends 52 of the bag may be sealed by any known thermal or mechanical process to form a bag of a predetermined length, such as for example twelve feet long. The bag 50 may be formed to contain a single inlet/outlet connection 54 for receiving and discharging water. By using a single such connection for both the ingress and egress of water, the number of joints in the material of the bag is minimized.

The inlet/outlet connection 54 is in fluid connection with a flow control valve 56. Flow control valve interconnects inlet connection 54 with a water inlet line 60 and a water outlet line 62. Inlet and outlet lines 60,62 connect with the appropriate upstream and downstream components of the flood irrigation system as described above for inflating and deflating the bag valve 50. Flow control valve may be manually actuated or it may be a powered valve. A solar powered solenoid valve may be desired for certain applications. Flow control valve 56 may be controlled from a centralized control system, or it may be set to actuate at a predetermined time or after a predetermined interval. In one embodiment flow control valve 56 is activated by a water level switch 58 located in the upstream flood plain 31 so that it admits water into the bag 50 as the upstream flood plain 31 is filled.

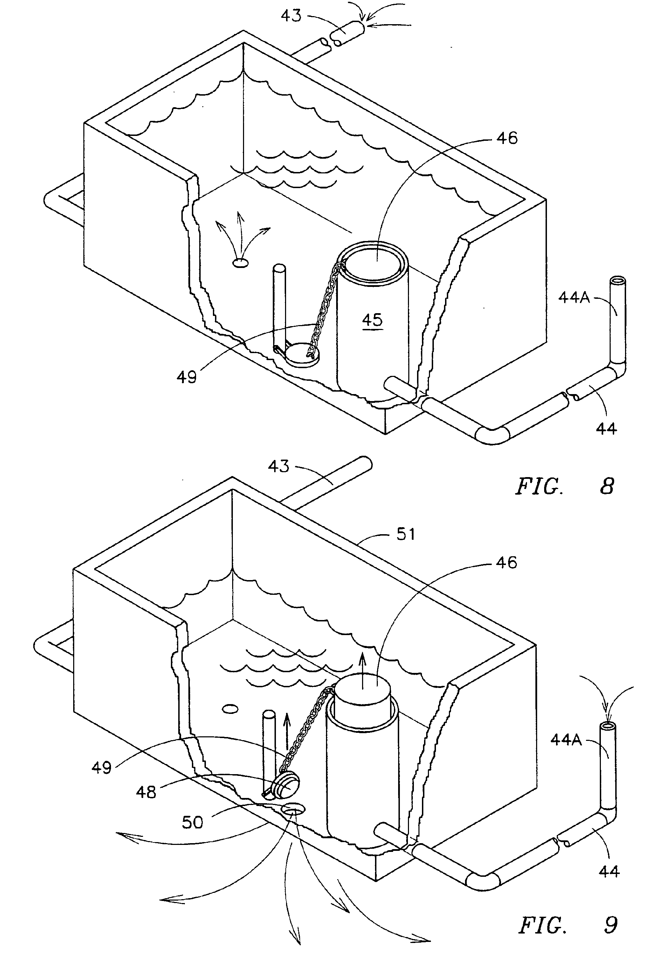

Bag 50 is positioned to lay on top of flexible conduit 35 which interconnects consecutive dikes in the flood irrigation system. When bag 50 is filled with water, the weight of the bag prevents the flow of water through conduit 35 located under the bag, thereby allowing the upstream dike 34 to fill with water and to retain water in the upstream flood plane 31. When flow control valve 56 is opened, the water contained in bag 50 is released, thereby allowing water to flow through conduit 35 to deflate dike 34. One such bag valve 50 is associated with each conduit 35 interconnecting consecutive ones of the dikes 34. Flow control valve 56 provides an alternative to the float and plug system as described in the embodiment of Figures 8 and 9.

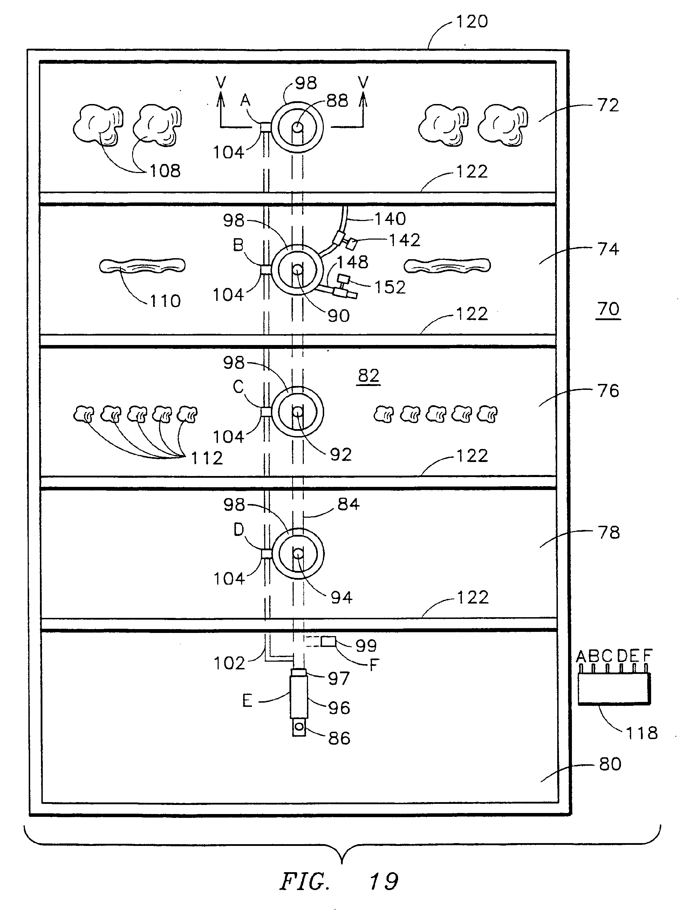

Figures 19-21 illustrate an alternate embodiment of the invention. Figure 19 is a top view of a flood irrigation apparatus 70 having at least one flood plain 72, or as illustrated, as having a plurality of flood plains 72,74,76,78 and having a water collection area 80. If more than one flood plain is provided, each of the flood plains 72,74,76,78 may be formed to have generally the same elevation, which is preferred if the flood irrigation system 70 is formed on relatively level land. Water collection area 80 may be formed at a lower elevation than the respective flood plains 72,74,76,78 in order to facilitate the gravity flow of water from the respective flood plains 72,74,76,78 into water collection area 80 via sloped pipe 84. A pumping apparatus 82 is provided for conveying water between the water collection area 80 and the flood plains 72,74,76,78. The pumping apparatus 82 includes a conduit such as pipe 84 having an opening 86 disposed within the water collection area 80 and an opening 88,90,92,94 disposed within each of the respective flood plains 72,74,76,78. The pipe is illustrated in phantom along most of its length because in this embodiment it is buried below the surface of the water collection area 80 and respective flood plains 72,74,76,78. Preferable pipe 84 is positioned to have a slope downward toward opening 86 so that it provides a flow path between the water collection area 80 and the flood plains for the flow of water from the respective flood plains 72,74,76,78 to the water collection area by gravity flow. This slope may be, for example, in a ratio of vertical drop to horizontal run of 0.003. A pump 96 is connected to the pipe 84 and is operable to pump water from the water collection area 80 into the respective flood plains 72,74,76,78. Pump 96 may advantageously be a screw pump for the efficient transfer of large volumes of water at a relatively low pressure head, but may alternatively be any style of pump including a positive displacement pump, centrifugal pump, submersible pump or a hydraulic pump. A flapper or other form of check valve 97 may be provided at the outlet of the pump, and a gate or slusch valve 99 may be connected between pipe 84 and water collection area 80.

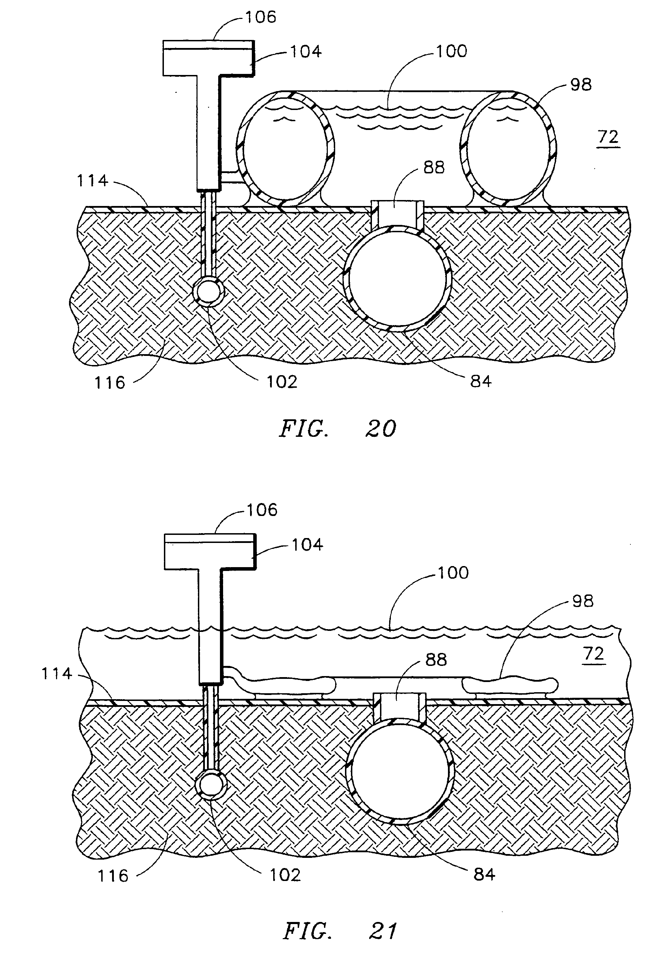

Associated with each of the openings 88,90,92,94 is an inflatable valve 98, as may be seen in cross-sectional view in Figures 20 and 21. Inflatable valve 98 may be formed by joining together one or more sheets of polyethylene or other material. Valve 98 is illustrated as being in a closed position (inflated condition) in Figure 20, and in an open postion (deflated condition) in Figure 21. When in its closed position, valve 98 is operable to prevent the transfer of water 100 between pipe 84 and flood plain 72. The particular embodiment of valve 98 illustrated in the figures has a donut shape with a generally tubular cross-section when inflated surrounding the opening 88 in pipe 84. Provided that the pressure head of the water being supplied via pipe 84 is less than that needed to overflow the donut shaped valve 98, water 100 introduced through pipe 84 when valve 98 is inflated will be trapped within the valve 98 and prevented from flooding flood plain 72, as illustrated in Figure 20. Water 100 introduced through pipe 84 when valve 98 is deflated will flow through (over) the valve 98 and will flood the flood plain 72, as show in Figure 21. It may be appreciated that other types of valves as known in the art and other types or shapes of inflatable valves, for example, square or rectangular with an open center, may be used to provide this function.

The interior of inflatable valve 98 may be provided with water from the water collection area 80 through pump 96 and a conduit such as second pipe 102, as illustrated in Figures 19-21. Alternatively, the filling mechanism for valve 98 may be supplied from a water source other than the water collection area 80, such as from a well, tank or public water supply. A control valve 104 is attached to second pipe 102 at the inlet to each of the inflatable valves 98 in the respective flood plains 72,74,76,78. Control valves 104 are operable to control the position/inflation of the inflatable valves 98. Control valves 104 may be, for example, solar powered control valves having a local solar panel 106 operable to provide electrical power to the valve in locations remote from centralized grid power. The operation of irrigation apparatus 70 is now described with respect to the cultivation of a plurality of potted plants 108,110,112, and in particular for the application where a different type of plant is being cultivated in each respective flood plain 72,74,76 and where no plant is being cultivated in flood plain 78. Flood irrigation apparatus 70 provides the flexibility for providing a different irrigation schedule for each of the respective flood plains 72,74,76.

Water is first added to water collection area 80 by artificial means or by the collection of rain water. Each of the respective flood plains 72,74,76 may be graded to slope gently toward the respective opening 88, 90,92,94 in pipe 84, thereby allowing rain water falling on the irrigation apparatus 70 to flow into water collection area 80 through pipe 84 when valves 98 are open. The slope of the flood plain surfaces should be sufficient to allow water to move by gravity flow but not so steep that such flow creates damaging currents. Furthermore, the slope and the overall dimensions of the flood plains must be considered to ensure that the depth of irrigation water is appropriate for any potted plant that is placed on the flood plain, i.e. pots placed on the downward side of the slope will be flooded to a greater height than those on the upward side of the slope. The surfaces should also be sufficiently smooth so that puddles are minimized. A water impermeable material 114, such as plastic, polyethylene, clay, pavement, etc. may be disposed proximate the surface of the water collection area 80 and each of the flood plains 72,74,76, either on or below the surface, in order to eliminate the adsorption of water into the underlying ground 116. The water impermeable material not only increases the amount of rain water collected, it also preserves the water for irrigation of the potted plants and eliminates potential pollution of the ground water by any fertilizers, pesticides or other chemicals applied to the plants 108,110,112. Water collection area 80 may be formed to be a wide, relatively shallow pond, or it may be formed to be a narrow, relatively deep trough. The relatively deeper design will expose less water surface area to the atmosphere, thereby minimizing evaporative losses.

Pump 96 may then be operated periodically to supply water from the water collection area 80 into pipe 84 and second pipe 102. The size of the pipes 84,102 and pump 96 may be selected to flood the respective flood plains 72,74,76,78 to a desired depth in a predetermined time period. A predetermined one or more of the flood plains 72,74,76,78 will thereby be flooded with the water exiting openings 88,90,92,94 depending upon the position of the respective inflatable valves 98. The position of the respective inflatable valves 98 is, in turn, controlled by the position of the respective control valves 104. Each of the respective control valves 104 may be connected to a controller 118, such as a personal computer, a programmable logic controller, or even a simple mechanical timing device, and thereby provided with respective control signal A,B,C,D. Controller 118 may also provide a control signal E for controlling the operation of pump 96. Controller 118 may be programmed to provide a predetermined frequency of flood irrigation to the respective flood plain 72,74,76,78 depending on the type of plant 108,110,112 being grown in that flood plain. The flood irrigation schedule may be varied in frequency of flooding, depth of flooding, duration of flood water retention time, etc. as appropriate for the particular plant or crop.

For the embodiment illustrated in Figure 19, flood plain 78 contains no plants. Therefore, controller 118 would be programmed to open the respective control valve 104 when pump 96 is operated in order to inflate the respective valve 98. The screw pump 96 provides a high volume flow of water to the flood plains 72,74,76 where inflatable valve 98 is deflated, but it provides insufficient pressure head to push the water over the top of donut valve 98, as shown in Figure 20, since a portion of the head generated by the pump 96 is expended as velocity within pipe 84 and only a remaining portion is available as static head above pipe 84. In contrast, the full pressure head produced by the pump 96 is available to inflate valve 98, since the flow becomes static in second pipe 102 once the valve 98 is fully inflated. Once inflatable valve 98 is fully inflated, control valve 104 may be closed to maintain valve 98 in the closed position even after the operation of pump 96 is terminated.

In flood plains 72,74,76, control valve 104 will be maintained closed, thereby keeping the respective inflatable valves 98 deflated and in their open position, as illustrated in Figure 21. When sufficient water has been provided to the flood plains 72,74,76, the operation of pump 96 is terminated, and the water begins to drain back to the water collection area 80 by gravity flow. The respective valve 98 may be moved to its closed position to retain the water within the flood plain for a predetermined resident time, or the water may be allowed to flow back through pipe 84 as soon as the operation of pump 96 is terminated. Controller 118 may also be connected to provide control signal F to slusch valve 99 to open in order to provide a low resistance flow path for the water draining to water collection area 80. During the resident time within the flood plains, the water will have provided the appropriate irrigation of the potted plants 108,110.112. The controller 118 is operable to selectively activate predetermined ones of the control valves 104 for selectively flooding and draining predetermined ones of the plurality of flood plains 72,74,76,78.

Even if all of the flood plains are at the same elevation, it may be desirable to sequentially flood the flood plains 72,74,76,78 one at a time in order to reduce the total volume of irrigation water that must be stored in water collection area 80. For example, flood plain 72 may first be flooded by operating pump 96 with valve 98 in that field at least partially deflated (open) while simultaneously having valves 98 in flood plains 74,76,78 inflated (closed). After the desired retention time in flood plain 72, the valve 98 in flood plain 74 may be at least partially deflated (opened), allowing a portion of the irrigation water to drain to adjacent flood plain 74 as the water in flood plains 72 and 74 approaches hydraulic equilibrium. The valve 98 in flood plain 74 is then re-inflated and slusch valve 99 opened to drain the water remaining in flood plain 72 into the water collection area 80. Thereafter, the water can be pumped from the water collection area 80 to flood plain 74 by deflating the valve 98 in that field and operating pump 96 with slusch valve 99 closed. A key to this type of operation is the rapid deflating and re-inflation of valves 98. This may be accomplished by using the water from inflatable dike 122 as a water source and by draining the water from a valve 98 into its associated flood plain. Pipe 140 and associated control valve 142 provide a fluid connection between the valves 98 and inflatable dike 122. Pipe 148 and associated control valve 152 provide the drain to the associated flood plain. Valves 142 and 152 may be any type of control valve, such as a motor valve, air valve, hydraulic valve or pneumatic valve. The water source for a hydraulic valve in these locations may be water collection area 80 through pump 96 and valve 104, the inflatable dike 122, a well or a public water source. The elevation of the top of inflatable dike 122 is higher than the top of valve 98, thus providing the necessary head to fill valve 98, and the volume of valve 98 should be small relative to the volume of dike 122 for most applications. Pipe 140 may be located above ground and should have a diameter sufficient to permit valve 98 to re-inflate quickly. The water removed from dike 122 can be replaced whenever convenient on a non-critical path basis.

By controlling the depth of the flooding, it is possible to avoid the wetting of the top of the plant pots, thereby retarding the germination of weed seeds which may come to land on the surface of the soil mixture in the pots. In this manner, the method of flood irrigation of this invention not only preserves water and protects the ground water from pollution, but it also reduces the time, effort and chemicals that must be expended to control weed growth.

The relative size and position of flood plains 72,74,76,78 may be conveniently selected and changed from time to time by using an inflated dike as the perimeter wall 120 and as the barrier 122 between adjacent flood plains 72,74,76,78 and water collection area 80. Once water or other fluid is introduced into such inflatable dikes, it need not be removed unless a change in position is desired. By adding or removing such dikes, a single large area may be graded and alternately used as a single flood plain and as a plurality of adjacent flood plains. Perimeter wall 120 may preferably be a dirt berm in order to provide a barrier that can be traversed with wheeled or tracked equipment for maintenance or agricultural activities.

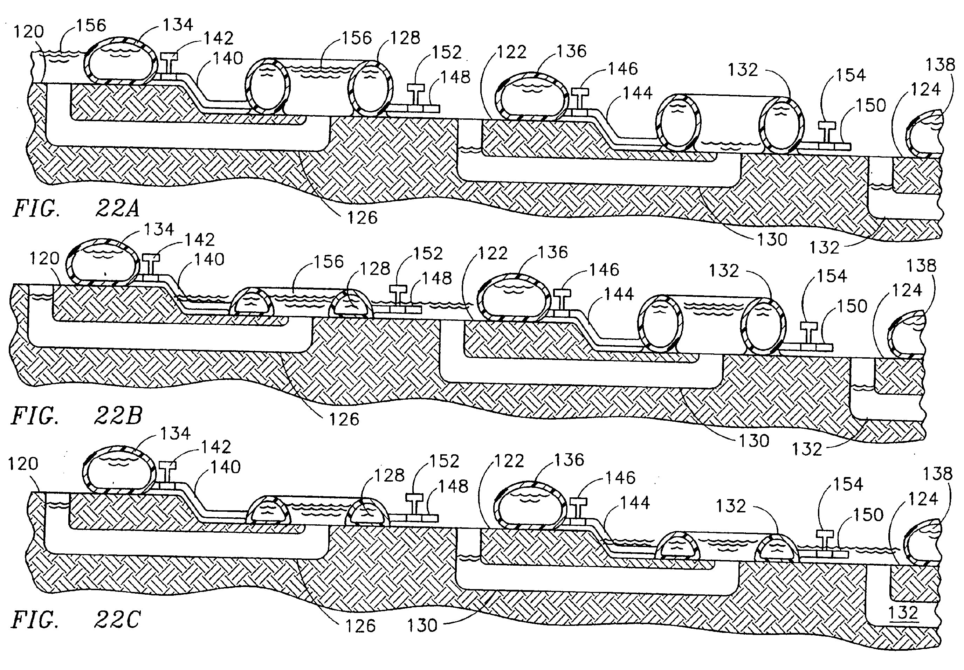

Figures 22A-C illustrate the operation of another embodiment of this invention where a plurality of flood plains 120,122,124 are formed at consecutively lower elevations. Flood plain 120 is connected to flood plain 122 by pipe 126 having an inflatable valve 128 disposed within flood plain 122. Similarly, flood plain 122 is connected to flood plain 124 by pipe 130 having an inflatable valve 132 disposed within flood plain 124. Water inflatable dikes 134,136,138 define at least a portion of the perimeter of flood plains 120,122,124 respectively. Dike 134 is connected to valve 128 by pipe 140 and control valve 142. Similarly, dike 136 is connected to valve 132 by pipe 144 and control valve 146. Valves 128,132 each have respective drain lines 148,150 and control valves 152,154 for the deflation of the valve by draining its water to its respective flood plain 122,124.

In Figure 22A, flood plain 120 has been flooded with a predetermined amount of irrigation water 156, and flood plain 122 is being maintained dry by inflated (closed) valve 128 and dike 134. In Figure 22B, control valve 152 has been opened to allow valve 128 to become partially deflated, thereby allowing the irrigation water 156 to drain from flood plain 120 into flood plain 122 through pipe 126. Because valve 132 is fully inflated, flood plain 124 remains dry. After irrigation water 156 has remained within flood plain 122 a predetermined resident time, valve 132 is partially deflated by opening valve 154, and irrigation water 156 drains from flood plain 122 into flood plain 124 through pipe 130. This process is repeated with respective flood plains as the irrigation water 156 proceeds downhill, where it is eventually reclaimed and again pumped to the highest flood plain 120 in accordance with a desired irrigation schedule. While the preferred embodiments of the present invention have been shown and described herein, it will be obvious that such embodiments are provided by way of example only. Numerous variations, changes and substitutions will occur to those of skill in the art without departing from the invention herein.

## Claims

1. A flood irrigation apparatus (10) comprising:
a plurality of flood plains (12);
a water collection area (13) disposed at an elevation lower than the plurality of flood plains (12);
a conduit (40) having an opening associated with the water collection area (13)and an opening associated with each of the respective plurality of flood plains (12), the conduit (40) being operable to convey water from the plurality of flood plains (12) to the water collection area (13) by gravity flow; and
a pump (14) attached to the conduit (40) and operable to pump water from the water collection area (13) through the conduit (40) and into the flood plains (12).

2. A flood irrigation apparatus (10) according to Claim 1, further comprising a valve (36, 50) associated with each of the respective openings (37) associated with a flood plain (12) for selectively allowing water to flow between the conduit (40) and the respective flood plain (12).

3. A flood irrigation apparatus (10) according to Claim 2, further comprising:
a controller attached to each valve (36, 50), the controller being operable to selectively activate predetermined ones of the valves (36, 50) for selectively flooding and draining predetermined ones of the plurality of flood plains (12).

4. A flood irrigation (10) apparatus according to Claim 2 or 3, wherein each valve (50), comprises an inflatable valve (50).

5. A flood irrigation apparatus according (10) to Claim 4, wherein the valve (50) comprises an inflatable doughnut shaped member surrounding the respective opening.

6. A flood irrigation apparatus (10) according to Claims 4 or 5, comprising a second conduit (54) connected between the pump (14) and each inflatable valve (50) for inflation thereof.

7. A flood irrigation apparatus (10) according to Claim 6, further comprising a control valve (56) connected to each second conduit (54) for controlling the inflation of the respective inflatable valve (50).

8. A flood irrigation apparatus (10) according to Claim 6 or 7, wherein the control valve (56) comprises a solar powered valve.

9. A flood irrigation apparatus (10) according to any one of Claims 4 to 8, further comprising:
an inflatable dike (34) disposed between two adjacent flood plains (12);
a fluid connection between the inflatable dike (34) and at least one of the inflatable valves (50).

10. A flood irrigation apparatus (10) according to Claim 9, further comprising a further control valve associated with the fluid connection.

11. A flood irrigation apparatus (10) according to any one of Claims 1 to 8, further comprising an inflatable dike (34) disposed between adjacent flood plains (12).

12. A flood irrigation apparatus (10) according to any preceding claim, wherein each flood plain (12) is defined by a perimeter comprising an inflatable dike (34).

13. A flood irrigation apparatus (10) according to any preceding claim, wherein the pump (14) comprises a screw pump (14).

14. A flood irrigation apparatus (10) according to any preceding claim, wherein the surface of each of the plurality of flood plains (12) is sloped toward the respective opening (37) in the conduit (40).

15. A flood irrigation apparatus (10) according to any preceding claim, wherein each of the plurality of flood plains (12) and the water collection area (13) comprise a water impermeable material.

16. A flood irrigation apparatus (10) according to any preceding claim, further comprising a water impermeable material disposed proximate each of the flood plains (12) and the water collection area (13).

17. A flood irrigation apparatus (10) according to Claim 1, wherein:
the plurality of flood plains (12) are formed at consecutively lower elevations, adjoining flood plains (12) in fluid communication with each other:
the water collection area (13) is in fluid communication with the lowest of the plurality of flood plains (12); and
the pump (14) is operable to move water from the water collection area (13) to a flood plain (12) other than the lowest of the plurality of flood plains (12).

18. A flood irrigation apparatus (10) according to Claim 17, wherein adjoining flood plains (12) are in fluid communication with each other at one or more first spillways, the water collection area (13) being in fluid communication with the lowest of the plurality of flood plains (12) at a second spillway (29), and further comprising:
a valve (20) associated with each spillway (20), each valve (20) being operable in a closed position to retain water in the adjacent higher flood plain (12) and operable in an open position to allow water to flow through the associated spillway (29).

19. A flood irrigation apparatus (10) according to Claim 18, wherein each spillway (29) comprises a water inflatable dike (34).

20. A flood irrigation apparatus (10) according to any one of Claims 17 to 19 comprising:
a pipe (35) connecting adjoining flood plains (12); and
a valve (36, 50) associated with each pipe (35).

21. A flood irrigation apparatus according to Claim 20, wherein the valve (50) is an inflatable valve (50).

22. A flood irrigation apparatus (10) according to Claim 21, further comprising: a fluid connection between each valve (36); and an inflatable dike (34) forming a barrier between adjacent flood plains (12).

23. A method of irrigating comprising the steps of:
forming a water collection area (13);
forming a plurality of flood plains (12) having elevation sufficient for draining water by gravity flow from the flood plains (12) to the water collection area (13);
collecting water in the water collection area (13);
activating a pumping apparatus (14) to transfer water from the water collection area (13) to the flood plains (12);
allowing the water in the flood plains (12) to drain to the water collection area (13);
disposing a conduit (40) between the water collection area (13) and each of the plurality of flood plains (12);
connecting the pump (14) to the conduit (40);
pumping water from the water collection area (13) to the flood plains (12) through the conduit (40) when the pumping apparatus (14) is activated; and
terminating the pump operation to allow water to flow by gravity flow from the flood plains (12) to the water collection area (13) through the conduit (40).

24. A method according to Claim 23, further comprising the steps of:
providing valves (36, 50) between the flood plains (12) and the water collection area (13);
closing the valves (36, 50) to retain the water within the flood plains (12) for a resident time; and
opening the valves (36, 50) after the resident time to allow the water to drain from the flood plains (12) into the water collection area (13).

25. A method according to Claim 24, wherein the valves (50) comprise inflatable valves (50);
the step of closing the valves (50) comprises introducing water into the inflatable valves (50);
and the step of opening the valves (50) comprises draining water from the inflatable valve (50).

26. A method according to any one of claims 23 to 25, further comprising the step of positioning the valves (36, 50) in each flood plain during the step of operating the pumps (14) so that water is transferred to a selected flood plain (12).

27. A method according to Claim 26, further comprising the step of providing a solar power source for each valve (36, 50).

28. A method according to Claim 26 or 27, wherein each valve (50) comprises an inflatable valve (50), and further comprising the steps of:
opening each valve (50) by supplying water to the valve (50) from the pump (14), and closing each valve (50) by draining water from the valve (50 to the water collection area (13).

29. A method according to any one of Claims 26 to 28, further comprising the step of positioning the valves (36, 50) after the step of operating the pump (14) so that a first portion of the water drains from the selected flood plain (12) to a second selected flood plain (12).

30. A method according to Claim 29, further comprising the step of after the first portion of the water has drained to a second selected flood plain (12), of positioning the valves (36, 50) so that the water remaining in the selected flood plain (12) drains to the water collection area (13).

31. A method according to any one of Claims 23 to 30, further comprising the step of disposing a water impermeable material proximate each of the water collection area (13) and the flood plains (12).

## Patentansprüche

1. Flutbewässerungsvorrichtung (10), die Folgendes umfasst:
mehrere Flutebenen (12);
einen Wassersammelbereich (13), der auf einer geringeren Höhe angeordnet ist als die mehreren Flutebenen (12);
eine Leitung (40) mit einer mit dem Wassersammelbereich (13) assoziierten Öffnung und jeweils einer mit jeder der mehreren Flutebenen (12) assoziierten Öffnung, wobei die Leitung (40) wirksam ist, Wasser durch Schwerkraftfluss von den mehreren Flutebenen (12) zum Wassersammelbereich (13) zu fördern; und
eine an der Leitung (40) angebrachte Pumpe (14), die wirksam ist, Wasser vom Wassersammelbereich (13) durch die Leitung (40) und in die Flutebenen (12) zu pumpen.

2. Flutbewässerungsvorrichtung (10) nach Anspruch 1, weiter umfassend jeweils ein mit jeder der mit einer Flutebene (12) assoziierten Öffnungen (37) assoziiertes Ventil (36, 50), um selektiv zuzulassen, dass Wasser zwischen der Leitung (40) und der jeweiligen Flutebene (12) fließt.

3. Flutbewässerungsvorrichtung (10) nach Anspruch 2, weiter umfassend:
jeweils einen an jedem Ventil (36, 50) angebrachten Regler, wobei der Regler wirksam ist, selektiv Vorherbestimmte der Ventile (36, 50) zu aktivieren, um selektiv Vorherbestimmte der mehreren Flutebenen (12) zu fluten und zu entwässern.

4. Flutbewässerungsvorrichtung (10) nach Anspruch 2 oder 3, wobei jedes Ventil (50) ein aufblasbares Ventil (50) umfasst.

5. Flutbewässerungsvorrichtung (10) nach Anspruch 4, wobei das Ventil (50) ein aufblasbares ringröhrenförmiges Glied umfasst, das die jeweilige Öffnung umgibt.

6. Flutbewässerungsvorrichtung (10) nach Anspruch 4 oder 5, umfassend eine zweite Leitung (54), die jeweils zwischen der Pumpe (14) und jedem aufblasbaren Ventil (50) zum Aufblasen desselben angeschlossen ist.

7. Flutbewässerungssystem (10) nach Anspruch 6, weiter umfassend ein Regelventil (56), das jeweils mit der zweiten Leitung (54) verbunden ist, um das Aufblasen des jeweiligen aufblasbaren Ventils (50) zu regeln.

8. Flutbewässerungsvorrichtung (10) nach Anspruch 6 oder 7, wobei das Regelventil (56) ein solargetriebenes Ventil umfasst.

9. Flutbewässerungsvorrichtung (10) nach einem der Ansprüche 4 bis 8, weiter umfassend:
einen aufblasbaren Damm (34) der zwischen zwei benachbarten Flutebenen (12) angeordnet ist;
eine Fluidverbindung zwischen dem aufblasbaren Damm (34) und mindestens einem der aufblasbaren Ventile (50).

10. Flutbewässerungsvorrichtung (10) nach Anspruch 9, weiter umfassend ein weiteres Regelventil, das mit der Fluidverbindung assoziiert ist.

11. Flutbewässerungsvorrichtung (10) nach einem der Ansprüche 1 bis 8, weiter umfassend einen aufblasbaren Damm (34), der zwischen benachbarten Flutebenen (12) angeordnet ist.

12. Flutbewässerungsvorrichtung (10) nach einem der vorangehenden Ansprüche, wobei jede Flutebene (12) durch eine einen aufblasbaren Damm (34) umfassende äußere Begrenzung definiert ist.

13. Flutbewässerungsvorrichtung (10) nach einem der vorangehenden Ansprüche, wobei die Pumpe (14) eine Schraubenpumpe (14) umfasst.

14. Flutbewässerungsvorrichtung (10) nach einem der vorangehenden Ansprüche, wobei die Oberfläche der mehreren Flutebenen (12) jeweils zur jeweiligen Öffnung (37) in der Leitung (40) hin abfällt.

15. Flutbewässerungsvorrichtung (10) nach einem der vorangehenden Ansprüche, wobei die mehreren Flutebenen (12) und der Wassersammelbereich (13) jeweils ein wasserundurchlässiges Material umfassen.

16. Flutbewässerungsvorrichtung (10) nach einem der vorangehenden Ansprüche, weiter umfassend ein wasserundurchlässiges Material, das jeweils proximal zu jeder der Flutebenen (12) und dem Wassersammelbereich (13) angeordnet ist.

17. Flutbewässerungsvorrichtung (10) nach Anspruch 1, wobei die mehreren Flutebenen (12) auf aufeinander folgend niedrigeren Höhen gebildet sind, wobei aneinander grenzende Flutebenen (12) in Fluidverbindung miteinander stehen:
der Wassersammelbereich (13) in Fluidverbindung mit der tiefsten der mehreren Flutebenen (12) steht; und
die Pumpe (14) wirksam ist; Wasser vom Wassersammelbereich (13) zu einer anderen als der tiefsten Flutebene (12) der mehreren Flutebenen (12) zu bewegen.

18. Flutbewässerungsvorrichtung (10) nach Anspruch 17, wobei aneinander grenzende Flutebenen (12) an einem oder mehreren ersten Überläufen in Fluidverbindung miteinander stehen, wobei der Wassersammelbereich (13) an einem zweiten Überlauf (29) mit der tiefsten der mehreren Flutebenen (12) in Fluidverbindung steht, des Weiteren Folgendes umfassend:
jeweils ein mit dem Überlauf (20) assoziiertes Ventil (20), wobei jedes Ventil (20) in einer geschlossenen Stellung wirksam ist, Wasser in der benachbarten höheren Flutebene (12) zurückzuhalten und in einer offenen Stellung wirksam ist, Wasser durch den assoziierten Überlauf (29) fließen zu lassen.

19. Flutbewässerungsvorrichtung (10) nach Anspruch 18, wobei jeder Überlauf (29) einen durch Wasser aufblasbaren Damm (34) umfasst.

20. Flutbewässerungsvorrichtung (10) nach einem der Ansprüche 17 bis 19, weiter umfassend:
ein Rohr (35), das aneinander angrenzende Flutebenen (12) verbindet; und
jeweils ein mit dem Rohr (35) assoziiertes Ventil (36, 50).

21. Flutbewässerungsvorrichtung nach Anspruch 20, wobei es sich bei dem Ventil (50) um ein aufblasbares Ventil (50) handelt.

22. Flutbewässerungsvorrichtung (10) nach Anspruch 21, weiter umfassend: eine Fluidverbindung zwischen allen Ventilen (36); und einen aufblasbaren Damm (34) der eine Sperre zwischen benachbarten Flutebenen (12) bildet.

23. Verfahren des Bewässerns, umfassend folgende Schritte:
Bilden eines Wassersammelbereichs (13);
Bilden mehrerer Flutebenen (12) mit ausreichender Höhe zum Ablassen von Wasser durch Schwerkraftfluss von den Flutebenen (12) zum Wassersammelbereich (13);
Sammeln von Wasser im Wassersammelbereich (13);
Aktivieren einer Pumpenvorrichtung (14) zum Fördern von Wasser vom Wassersammelbereich (13) zu den Flutebenen (12);
Zulassen, dass das Wasser in den Flutebenen (12) zum Wassersammelbereich (13) abläuft;
Anordnen einer Leitung (40) zwischen dem Wassersammelbereich (13) und jeder der Flutebenen (12);
Verbinden der Pumpe (14) mit der Leitung (40);
Pumpen von Wasser vom Wassersammelbereich (13) zu den Flutebenen (12) durch die Leitung (40) wenn die Pumpenvorrichtung (14) aktiviert ist; und
Beenden des Pumpenbetriebs, um zuzulassen, dass Wasser durch Schwerkraftfluss durch die Leitung (40) von den Flutebenen (12) zum Wassersammelbereich (13) fließt.

24. Verfahren nach Anspruch 23, das weiter folgende Schritte umfasst:
Vorsehen von Ventilen (36, 50) zwischen den Flutebenen (12) und dem Wassersammelbereich (13);
Schließen der Ventile (36, 50), um das Wasser in den Flutebenen (12) während einer Verweilzeit zurückzuhalten; und
Öffnen der Ventile (36, 50) nach der Verweilzeit, um zuzulassen, dass das Wasser von den Flutebenen (12) in den Wassersammelbereich (13) abläuft.

25. Verfahren nach Anspruch 24, wobei die Ventile (50) aufblasbare Ventile (50) umfassen;
der Schritt des Schließens der Ventile (50) das Einbringen von Wasser in die aufblasbaren Ventile (50) umfasst;
und der Schritt des Öffnens der Ventile (50) das Ablassen von Wasser aus dem aufblasbaren Ventil (50) umfasst.

26. Verfahren nach einem der Ansprüche 23 bis 25, weiter umfassend den Schritt des Positionierens der Ventile (36, 50) in jeder Flutebene während des Schritts des Betreibens der Pumpen (14), so dass Wasser zu einer gewählten Flutebene (12) gefördert wird.

27. Verfahren nach Anspruch 26, weiter umfassend den Schritt des Bereitstellens einer Solarstromquelle für jedes Ventil (36, 50).

28. Verfahren nach Anspruch 26 oder 27, wobei jedes Ventil (50) ein aufblasbares Ventil (50) umfasst und das weiter folgende Schritte umfasst:
Öffnen jedes Ventils (50) durch Zuführen von Wasser zum Ventil (50) von der Pumpe (14) und Schließen jedes Ventils (50) durch Ablassen von Wasser vom Ventil (50) zum Wassersammelbereich (13).

29. Verfahren nach einem der Ansprüche 26 bis 28, weiter umfassend den Schritt des Positionierens der Ventile (36, 50) nach dem Schritt des Betreibens der Pumpe (14), so dass ein erster Anteil des Wassers von der gewählten Flutebene (12) zu einer zweiten gewählten Flutebene (12) abläuft.

30. Verfahren nach Anspruch 29, weiter umfassend den Schritt, nachdem der erste Anteil des Wassers zu einer zweiten gewählten Flutebene (12) abgelaufen ist, des Positionierens der Ventile (36, 50), so dass das in der gewählten Flutebene (12) verbleibende Wasser zum Wassersammelbereich (13) abläuft.

31. Verfahren nach einem der Ansprüche 23 bis 30, weiter umfassend den Schritt des Anordnens eines wasserundurchlässigen Materials jeweils proximal zum Wassersammelbereich (13) und den Flutebenen (12).

## Revendications

1. Dispositif d'irrigation par submersion (10) comprenant :
une pluralité de plaines inondables (12),
une zone de collecte d'eau (13) disposée à une élévation plus basse que la pluralité de plaines inondables (12) ;
une conduite (40) ayant une ouverture associée à la zone de collecte d'eau (13) et une ouverture associée respectivement à chaque plaine de la pluralité de plaines inondables (12), la conduite (40) pouvant être exploitée pour transférer de l'eau de la pluralité de plaines inondables (12) à la zone de collecte d'eau (13) par écoulement gravitaire ; et
une pompe (14) fixée à la conduite (40) et pouvant être exploitée pour pomper de l'eau de la zone de collecte d'eau (13) par la conduite (40) et dans les plaines inondables (12).

2. Dispositif d'irrigation par submersion (10) conforme à la revendication 1, comprenant en outre une vanne (36, 50) associée à chacune des ouvertures respectives (37) associées à une plaine inondable (12) pour permettre un écoulement sélectif de l'eau entre la conduite (40) et la plaine inondable (12) respective.

3. Dispositif d'irrigation par submersion (10) conforme à la revendication 2, comprenant en outre :
un contrôleur fixé à chaque vanne (36, 50), le contrôleur pouvant être exploité de manière à activer sélectivement certaines vannes (36, 50) prédéterminées pour submerger et drainer sélectivement certaines plaines parmi la pluralité de plaines inondables (12).

4. Dispositif d'irrigation par submersion (10) conforme à la revendication 2 ou 3 dans lequel chaque vanne (50) comporte une vanne gonflable (50).

5. Dispositif d'irrigation par submersion (10) conforme à la revendication 4 dans lequel la vanne (50) comprend un organe torique gonflable entourant l'ouverture respective.

6. Dispositif d'irrigation par submersion (10) conforme aux revendications 4 ou 5 comprenant une deuxième conduite (54) reliée entre la pompe (14) et chaque vanne gonflable (50) pour gonfler celle-ci.

7. Dispositif d'irrigation par submersion (10) conforme à la revendication 6 comprenant une vanne de commande (56) reliée à chaque deuxième conduite (54) pour commander le gonflement de la vanne gonflable respective (50).

8. Dispositif d'irrigation par submersion (10) conforme à la revendication 6 ou 7 dans lequel la vanne de commande (56) comprend une vanne à énergie solaire.

9. Dispositif d'irrigation par submersion (10) conforme à l'une quelconque des revendications 4 à 8 comprenant en outre :
une digue gonflable (34) disposée entre deux plaines inondables (12) adjacentes ;
une connexion de fluides entre la digue gonflable (34) et au moins une des vannes gonflables (50).

10. Dispositif d'irrigation par submersion (10) conforme à la revendication 9 comprenant en outre une autre vanne de commande associée à la connexion de fluides.

11. Dispositif d'irrigation par submersion (10) conforme à l'une quelconque des revendications 1 à 8 comprenant en outre une digue gonflable (34) disposée entre deux plaines inondables (12) adjacentes.

12. Dispositif d'irrigation par submersion (10) conforme à une quelconque revendication précédente dans lequel chaque plaine inondable (12) est définie par un périmètre comprenant une digue gonflable (34).

13. Dispositif d'irrigation par submersion (10) conforme à une quelconque revendication précédente dans lequel la pompe (14) est constituée d'une pompe à vis (14).

14. Dispositif d'irrigation par submersion (10) conforme à une quelconque revendication précédente dans lequel la surface de chaque plaine de la pluralité de plaines inondables (12) est inclinée vers l'ouverture respective (37) dans la conduite (40).

15. Dispositif d'irrigation par submersion (10) conforme à une quelconque revendication précédente dans lequel chaque plaine de la pluralité de plaines inondables (12) et la zone de collecte d'eau (13) comprennent un matériau imperméable à l'eau.

16. Dispositif d'irrigation par submersion (10) conforme à une quelconque revendication précédente comprenant en outre un matériau imperméable à l'eau disposé à proximité de chacune des plaines inondables (12) et de la zone de collecte d'eau (13).

17. Dispositif d'irrigation par submersion (10) conforme à la revendication 1 dans lequel :
les plaines de la pluralité de plaines inondables (12) sont formées à des élévations consécutivement plus basses, les plaines inondables (12) contiguës sont en communication de fluides entre elles ;
la zone de collecte d'eau (13) est en communication de fluides avec la plaine la plus basse dans la pluralité de plaines inondables (12) ; et
la pompe (14) peut être exploitée pour faire passer de l'eau de la zone de collecte d'eau (13) à une plaine inondable (12) autre que la plaine la plus basse dans la pluralité de plaines inondables (12).

18. Dispositif d'irrigation par submersion (10) conforme à la revendication 17 dans lequel les plaines inondables (12) contigües sont en communication de fluides entre elles au niveau d'un ou plusieurs premier(s) évacuateur(s), la zone de collecte d'eau (13) étant en communication de fluides avec la plaine la plus basse dans la pluralité de plaines inondables (12) au niveau d'un deuxième évacuateur (29) et qui comprend en outre :
une vanne (20) associée à chaque évacuateur (20), chaque vanne (20) pouvant être exploitée à une position fermée pour retenir l'eau dans la plaine inondable (12) adjacente plus haute et à une position ouverte pour permettre à l'eau de s'écouler par l'évacuateur associé (29).

19. Dispositif d'irrigation par submersion (10) conforme à la revendication 18 dans lequel chaque évacuateur (29) comporte une digue gonflable à l'eau (34).

20. Dispositif d'irrigation par submersion (10) conforme à l'une quelconque des revendications 17 à 19 comprenant :
un tuyau (35) reliant des plaines inondables (12) contigües ; et
une vanne (36, 50) associée à chaque tuyau (35).

21. Dispositif d'irrigation par submersion conforme à la revendication 20 dans lequel la vanne (50) est une vanne gonflable (50).

22. Dispositif d'irrigation par submersion (10) conforme à la revendication 21 comprenant en outre : une connexion de fluides entre chaque vanne (36) ; et une digue gonflable (34) qui forme une barrière entre les plaines inondables (12) adjacentes.

23. Procédé d'irrigation mettant en jeu les étapes suivantes :
former une zone de collecte d'eau (13) ;
former une pluralité de plaines inondables (12) dont l'élévation est suffisante pour drainer l'eau par écoulement gravitaire à partir des plaines inondables (12) vers la zone de collecte d'eau (13) ;
collecter l'eau dans la zone de collecte d'eau (13);
activer un dispositif de pompage (14) pour transférer l'eau de la zone de collecte d'eau (13) aux plaines inondables (12) ;
permettre à l'eau des plaines inondables (12) de se drainer vers la zone de collecte d'eau (13) ;
disposer une conduite (40) entre la zone de collecte d'eau (13) et chaque plaine d'une pluralité de plaines inondables (12) ;
raccorder la pompe (14) à la conduite (40) ;
pomper l'eau de la zone de collecte d'eau (13) vers les plaines inondables (12) par la conduite (40) quand le dispositif de pompage (14) est activé ; et
mettre fin au fonctionnement de la pompe pour permettre à l'eau de s'écouler par gravité des plaines inondables (12) vers la zone de collecte d'eau (13) par la conduite (40).

24. Procédé conforme à la revendication 23 comportant en outre les étapes suivantes :
installer des vannes (36, 50) entre les plaines inondables (12) et la zone de collecte d'eau (13) ;
fermer les vannes (36, 50) pour retenir l'eau à l'intérieur des plaines inondables (12) pendant une durée de présence ; et
ouvrir les vannes (36, 50) au bout de la durée de présence pour permettre le drainage de l'eau des plaines inondables (12) vers la zone de collecte d'eau (13).

25. Procédé conforme à la revendication 24 dans lequel les vannes (50) comprennent des vannes gonflables (50) ;
l'étape de fermeture des vannes (50) met en jeu une introduction d'eau dans les vannes gonflables (50) ;
et l'étape d'ouverture des vannes (50) met en jeu une évacuation d'eau des vannes gonflables (50).

26. Procédé conforme à l'une quelconque des revendications 23 à 25 comprenant en outre l'étape de positionnement des vannes (36, 50) dans chaque plaine inondable pendant l'étape d'exploitation des pompes (14) pour que l'eau soit transférée à une plaine inondable (12) sélectionnée.

27. Procédé conforme à la revendication 26 comprenant en outre l'étape qui consiste fournir une source d'énergie solaire à chaque vanne (36, 50).

28. Procédé conforme à la revendication 26 ou 27 dans lequel chaque vanne (50) comporte une vanne gonflable (50) et qui comporte en outre les étapes consistant à :
ouvrir chaque vanne (50) en fournissant de l'eau à la vanne (50) à partir de la pompe (14), et à fermer chaque vanne (50) en drainant l'eau de la vanne (50) vers la zone de collecte d'eau (13).

29. Procédé conforme à l'une quelconque des revendications 26 à 28 comprenant en outre l'étape de positionnement des vannes (36, 50) après l'étape d'exploitation de la pompe (14) pour qu'une première partie de l'eau se draine de la plaine inondable (12) sélectionnée vers une deuxième plaine inondable (12) sélectionnée.

30. Procédé conforme à la revendication 29 comportant en outre l'étape qui consiste, une fois la première partie de l'eau drainée vers une deuxième plaine inondable (12) sélectionnée, à positionner les vannes (36, 50) pour que l'eau restante dans la plaine inondable (12) sélectionnée se draine vers la zone de collecte d'eau (13).

31. Procédé conforme à l'une quelconque des revendications 23 à 30 comprenant en outre l'étape consistant à disposer un matériau imperméable à l'eau à proximité de chaque zone de collecte d'eau (13) et plaine inondable (12).
